# EUROPEAN PATENT APPLICATION

(11) **EP 4 560 598 A1**
(43) Date of publication of application: **28.05.2025**
(21) Application number: 23212271.3
(22) Date of filing: 27.11.2023
(51) Int. Cl.: G08B 25/00, H04M 11/04, H04M 3/28, H04M 3/32

(54) **METHOD FOR TESTING AN EMERGENCY VOICE COMMUNICATION SYSTEM**

(71) Applicant: Robert Bosch GmbH, 70442 Stuttgart (DE)
(72) Inventor: Barratt, Christopher, Nelson, BB9 6RT (GB)

(57) **Abstract**

Method for testing an emergency voice communication system (50) having a master panel (10) and at least one outstation (20a, 20b) as well as a computing unit (100) and a computer program for carrying out the method and an emergency voice communication system (50). The method includes the steps of communicating an audio signal produced by a microphone (20-1) of an outstation (20a, 20b) of the emergency voice communication system (50) to the master panel (10) thereof; recording the audio signal by the master panel (10) and communicating the recorded audio signal back to the outstation (20a, 20b); and playing back the recorded audio signal by a loudspeaker (20-1) of the outstation (20a, 20b).

## Description

The present invention relates to method for testing an emergency voice communication system having a master panel and at least one outstation, in particular by only one testing person, as well as a computing unit and a computer program for carrying out the method and an emergency voice communication system.

### Background of the invention

Emergency voice communication (EVC) systems may be installed in commercial buildings for allowing people who are unable to use escape routes or evacuation lifts by themselves in an emergency to send a rescue call and wait for help.

An EVC system provides two-way communication between a central control point (master panel) and other outstations located throughout a building. Primarily for use in the event of an emergency, an EVC system is designed, e.g., to aid the evacuation of disabled people from a disabled refuge area. Furthermore, an EVC system allows firefighters and others to communicate with one another during emergency situations.

Once an EVC system has been installed, it requires extensive testing in line with legal requirements and quality standards of the manufactures. Majority of these tests such as for master panels, power supplies and cabling can be undertaken by a single technician. However, testing outstations currently requires two technicians, one must be at the central office to answer a call from a particular outstation, and the other must visit each outstation within a site to test it. Since many new sites may have more than 100 outstations, there is a significant amount of time and effort required to test each site.

### Disclosure of the invention

According to the invention, a method for testing an emergency voice communication system, in particular by only one testing person, as well as a computing unit and a computer program for carrying out the method and an emergency voice communication system are proposed. Further preferred developments are described by the dependent claims and the following description.

A new method and system are provided using technology replacing the second testing person and provide the same level of testing of the outstations and the audio/data path to the master panel. The system is based on being achieved through software and digital audio storage. A fully functional and auditable test can be completed by a single technician with this solution needing only small modifications on an existing master panel such as facility of event logging and a small amount of temporary storage for audio files created as part of the testing.

The emergency voice communication (EVC) system has a master panel and at least one outstation. In particular, the EVC system comprises a plurality of outstations such as refuge outstations and fire telephones. Any other type of outstation is also possible. Each outstation may comprise a microphone and a loudspeaker and may be configured to establish an audio line to the master panel. The master panel may comprise a hand set, for answering a call from an outstation, a display for showing which outstation is calling, and a digital audio storage for storing a message from an outstation.

The method according to the invention comprises, in a test mode of the emergency voice communication system, communicating an audio signal produced by a microphone of an outstation of the emergency voice communication system to the master panel thereof. The audio signal may be sent, e.g., via a first audio line from the microphone of the outstation to the master panel while being received by the microphone.

For example, the test mode may be initiated by the testing person using a system control panel of the EVC system, which may be included, e.g., in the master panel thereof. In an embodiment, the method may comprise this step, in which the test mode of the emergency voice communication system is initiated, as an initial step.

It may be possible that the system control panel is included in the at least one outstation and/or that the system control panel is a separate control unit. In the latter case, the system control panel may be connected to the master panel and/or the at least one outstation by a wireless connection. A connection by wire is also possible. The system control panel may comprise a processor, a read only memory, a random-access memory and an input/output device and may be configured to control the EVC system. In particular, the system control panel may be included in the master panel and may also include the digital audio storage. In particular, the system control panel may be configured to control the the digital audio storage during the test mode of the EVC system.

In the test mode, normal operation of the EVC system may be interrupted for testing its outstation(s) as well as a data and audio connection between each outstation and the master panel of the EVC system. For example, the testing person may initiate the test mode by pressing a particular button on the master panel or by sending a particular message from an outstation to the master panel which may result in an input into the input device of the system control panel that causes the latter to initiate the test mode.

In an embodiment, the audio signal is produced by the microphone receiving a spoken message. The message may be sent, e.g., via a first audio line from the microphone of the outstation to the master panel while being spoken into the microphone by the testing person.

According to an embodiment, the message may be spoken by the testing person after initiating a call from the outstation to the master panel. For example, the testing person may have initiated the call by pressing a call button of the outstation thereby establishing the first audio line to the master panel of the EVC system.

In response, the testing person may be prompted by the master panel to speak the message into the microphone of the outstation for a predetermined time. In particular, the testing person may speak a predetermined message at a predetermined volume and speed for the predetermined time. During the call, a status indicator, such as an LED, may light up on the outstation to indicate an active condition thereof and the established first audio line to the master panel.

According to an embodiment, boundary conditions of the audio signal may be logged, e.g., by the system control panel the master panel. The boundary conditions may be a location of the outstation, a date and a time of the call, information about environmental conditions during the call etc.

Subsequently, in a second step, the audio signal received from the outstation is recorded by the master panel and communicated back to outstation.

The audio signal may be sent back, e.g., via a second audio line from the master panel to the outstation. The second audio line may be identical to the first audio line or there may be two different audio lines. In particular, the recorded audio signal can be sent back as it has been received, without making any changes in terms of volume or reception quality.

Subsequently, in a third step, the audio signal is played back by a loudspeaker of the outstation.

In this way, it is possible to replace a second testing person by a recorded spoken message from a single testing person. A single testing person at an outstation can test the audio connection in both directions in a very easy and reliable way.

According to an embodiment, the recorded audio signal may be sent back to the outstation a predetermined time after its reception at the master panel. This ensures that the audio line is clear (in case the first and the second audio line are identical) and that the testing person in the outstation is ready to receive the recorded message.

According to an embodiment, an intelligibility of the played back message is verified. By this, the quality of the audio signal generation, transmission and play back can easily tested.

According to an embodiment, the intelligibility of the recorded message may be verified by the testing person listening to the loudspeaker of the outstation or by an acoustic measuring device. The acoustic measuring device may be, for example, a measuring microphone that may measure the message spoken in the microphone of the outstation by the testing person and the recorded message received back via the loudspeaker of the outstation and may compare the spoken and the recorded message.

According to an embodiment, if the recorded message is clearly intelligible and the EVC system does not include any further outstations, the test mode of the emergency voice communication system is cancelled, e.g., by the testing person. Before exiting the test mode, the positive test result may be logged, e.g., by the system control panel of the EVC system.

Otherwise, the first to third steps are repeated, which means that a new message is spoken into the microphone of the outstation, recorded by the master panel, sent back to the outstation and played back for verifying its intelligibility. The first to third steps may be repeated for a predetermined number of times and if no intelligible message is received at the outstation during these repetitions, a failure may be logged, e.g., by the system control panel, and a repair of the outstation may be initiated.

According to an embodiment, the first to third steps are performed at one or more further outstations before the test mode is terminated. In other words, if the EVC system comprises more than one outstation, the test mode is not terminated until all outstations belonging to the EVC system have been tested by the testing person. For this purpose, the testing person may visit each outstation successively and perform the first to third steps described above before exiting the test mode after testing the last outstation.

According to an embodiment, a message from a preceding outstation recorded by the master panel is deleted before the first to third steps are performed at a further outstation. Since all results of the tests performed at the outstations may be logged, e.g., by the system control panel, there is no need to store the messages for a longer period of time, so only a small amount of audio storage space is required in the master panel.

By performing the tests as described above, it is possible to check the complete functionality of each outstation including the call button, the microphone, the loudspeaker, the status indicator and the audio lines between the outstations and the master panel by only one testing person.

A computing unit according to the invention, e.g. a system control panel of the EVC system, is configured, in particular programmatically, to carry out a method according to the invention.

The implementation of a method according to the invention in the form of a computer program or computer program product with program code for carrying out all method steps is also advantageous, since this causes particularly low costs, especially if an executing control unit is still used for further tasks and is therefore present anyway. Suitable data carriers for providing the computer program are, in particular, magnetic, optical and electrical memories, such as hard disks, flash memories, EEPROMs, DVDs and so on. It is also possible to download a program via computer networks (Internet, Intranet, etc.).

Further advantages and embodiments of the invention can be seen in the following description and the accompanying figures. The invention is illustrated schematically by means of examples in the figures and is described below with reference to the figures. Same elements are provided with the same reference signs so that a repeated description is omitted unless necessary.

### Brief description of the figures

Figure 1 shows schematically an example of an emergency voice communication system not covered by the present invention; and
Figure 2 shows schematically and exemplarily an emergency voice communication system according to an embodiment of the present invention.
Figure 3 shows a flow chart including method steps according to an embodiment of the present invention.

### Embodiments of the invention

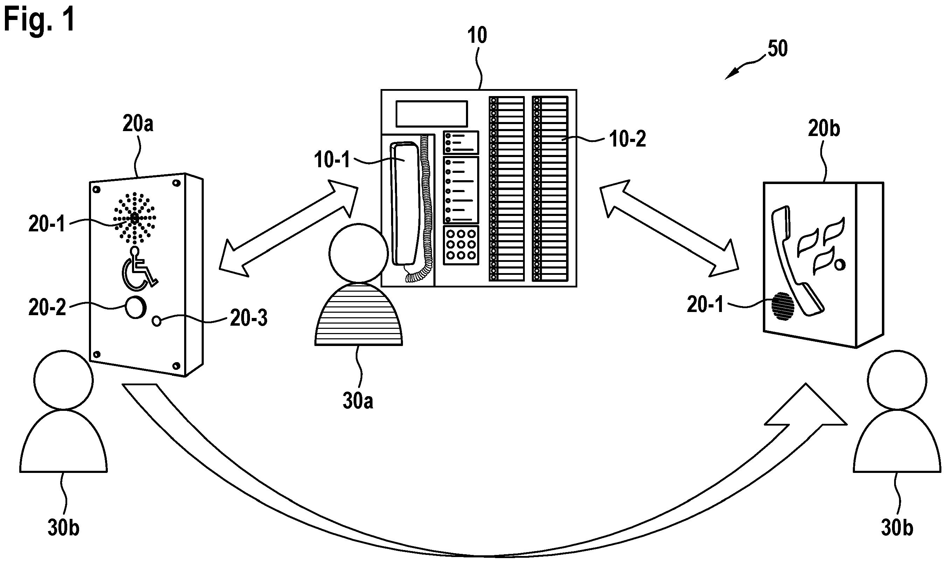

Figure 1 schematically shows an example of an emergency voice communication (EVC) system 50 not covered by the present invention. The depicted EVC system 50 exemplarily comprises a master panel 10 and two outstations 20a, 20b, a first outstation 20a being a refuge outstation 20a and a second outstation 20b being a fire telephone 20b. The shown master panel 10 includes a hand set 10-1 and a plurality of colored signs 10-2 indicating which outstation 20a, 20b is calling. Each outstation 20a, 20b has a loudspeaker-microphone assembly 20-1 and the refuge outstation 20a additionally comprises a call button 20-2. It may be also possible that each outstation includes a separate microphone and a separate loudspeaker. Regarding the refuge outstation 20a, in case of an emergency a person concerned may press the call button 20-2 for establishing an audio line to the master panel 10.

The master panel 10 may be located at a site's emergency operations center, where a responsible employee may answer the emergency call and organize assistance. An audio line between the fire telephone 20b and the master panel 10 may be automatically established in case of a detected fire, in order to allow for calling help via the fire telephone.

In case a new an EVC system 50 has been installed, it requires extensive testing in line with legal requirements and quality standards of the manufactures.

In Figure 1 a testing of an EVC system 50 not covered by the present invention after installation is shown. In this case, a first person 30a has to be located at the master panel 10 for answering test calls initiated by a second person 30b who sequentially visits the two outstations 20a, 20b (indicated by the curved arrow from the first and the second outstation 20a, 20b). In other words, for testing the two-way communication between the master panel 10 and each of the two outstations 20a, 20b, two persons exchanging a message are required (indicated by the double-sided arrows between each outstation 20a, 20b and the master panel 10). Since contrary to the present example, in which only two outstations are exemplarily shown, many new sites may have more than 100 outstations, the first person 30a wastes a considerable amount of time just being available at the master panel without being able to perform other tasks.

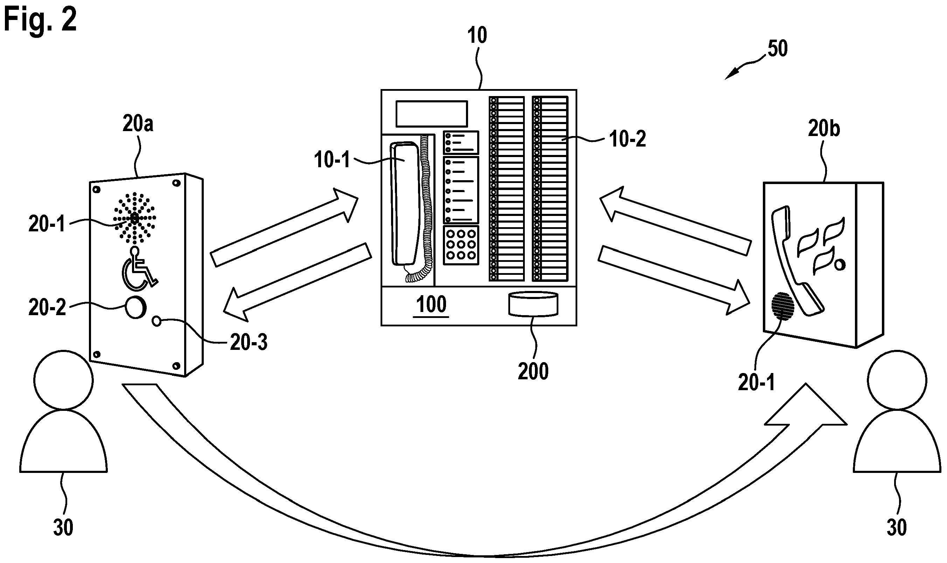

Figure 2 shows schematically and exemplarily an EVC system 50 according to an embodiment of the present invention. The EVC system 50 depicted in Figure 2 differs from the system shown in Figure 1 in that the master panel 10 additionally includes a system control panel 100 and a digital audio storage 200. In the present case, the system control panel 100 is a part of the master panel and includes the digital audio storage 200. However, it may be also possible that the system control panel 100 and the digital audio storage 200 are separate units being connected to the master panel via a wireless or wired connection, for example.

The system control panel 100 may comprise a processor, a read only memory, a random-access memory and an input/output device (all not shown) and may be configured to control the EVC system 50. The digital audio storage 200 may be configured to record messages received from the outstations 20a, 20b and to send the recorded messages back to the outstations 20a, 20b. In particular, the digital audio storage 200 may be controlled by the system control panel 100 to record and sent back messages from/to the outstations 20a, 20b in a test mode of the EVC system 50.

In the present example only one person 30 is required for testing an EVC system after installation, as shown in Figure 2.

For performing the testing, the testing person 30 may initiate the test mode of the EVC system on the system control panel 100. This may be done by pressing a particular button on the master panel 10 or by sending a particular message from an outstation 20a, 20b to the master panel 10 which may result in an input into the input device of the system control panel 100 that causes the latter to initiate the test mode. In the test mode, normal operation of the EVC system 50 may be interrupted for testing its outstations 20a, 20b as well as a data and audio connection between each outstation 20a, 20b and the master panel 10 of the EVC system 50.

When the test mode is active, the testing person 30 may start testing the first outstation 20a, being a refuge outstation 20a in the shown example. For this purpose, the testing person 30 may press the call button 20-2 and may speak a message in the loudspeaker-microphone assembly 20-1 of the refuge outstation 20a. The loudspeaker-microphone assembly 20-1 generates an audio signal based on the spoken message and communicates this audio signal to the master panel. The message may be sent, e.g., via a first audio line from the loudspeaker-microphone assembly 20-1 of the refuge outstation 20a to the master panel 10 while being spoken into the loudspeaker-microphone assembly 20-1 by the testing person 30 (indicated by the arrow from the refuge outstation 20a to the master panel 10).

In particular, after pressing the call button 20, the testing person 30 may first be prompted by the master panel 10 to speak a message into the microphone for a predetermined time, and the testing person 30 may begin speaking only after receiving the prompt. During the call, a status indicator 20-3, such as an LED 20-3, may light up on the refuge outstation 20a to indicate an active condition thereof and the established first audio line to the master panel 10.

Boundary conditions of the message received from the refuge outstation 20a may be logged, e.g., by the system control panel 100 of the master panel 10. Boundary conditions may be a location of the refuge outstation 20a, a date and a time of the call, information about environmental conditions during the call etc.

Subsequently, the message received from the refuge outstation 20a is recorded by the digital audio storage 200 of the master panel 10 and sent back to the loudspeaker-microphone assembly 20-1 of the refuge outstation 20a for play back and for verifying an intelligibility of the recorded message. The recorded message may be sent back, e.g., via a second audio line from the master panel 10 to the loudspeaker-microphone assembly 20-1 of the refuge outstation 20a (indicated by the arrow from the master panel 10 to the refuge outstation 20a). The second audio line may be identical to the first audio line or there may be two different audio lines. In particular, the recorded message can be sent back without undergoing any changes in terms of volume or reception quality. In this way, it is possible to replace a second testing person 30b by a recorded spoken message from a single testing person 30.

The intelligibility of the recorded message may be verified by the testing person 30 listening to the loudspeaker-microphone assembly 20-1 of the refuge outstation 20a or by an acoustic measuring device (not shown). The acoustic measuring device may be, for example, a measuring microphone that may measure the message spoken in the microphone of the outstation by the testing person and the recorded message received back via the loudspeaker of the outstation and may compare the spoken and the recorded message.

If the recorded message is clearly intelligible, the testing person may confirm the functionality of the refuge outstation 20a and the positive test result may be logged by the system control panel 100. The confirmation may be input into the system control panel 100 by sending a predetermined message of signal from the refuge outstation to the signal control device.

Then, the testing person may continue the testing by visiting the second outstation 20b being a fire telephone, and may repeat the above described testing steps (indicated by the curved arrow from the first and the second outstation 20a, 20b). Before the testing person 30 starts to test the fire telephone 20b, the messages sent from the refuge outstation 20a and recorded by digital audio storage 200 of the master panel 10 may be deleted, to provide enough space on the digital audio storage 200 for recording a new message.

If the recorded message is not clearly intelligible, the testing person 30 may again press the call button 20-2 of the refuge outstation 20a, receive a prompt from the master panel 10 and again speak the message in the loudspeaker-microphone assembly 20-1. This message may again be recorded by the master panel 10 and sent back to the refuge outstation 20a for verifying its intelligibility. These steps may be repeated for a predetermined number of times and if no intelligible message is received at the refuge outstation during these repetitions, a failure may be logged, e.g., by the system control panel 100, and a repair of the refuge outstation 20a may be initiated by the testing person.

When all outstations 20a, 20b have been successfully tested, the testing person 30 may exit test mode on the system control panel 100, allowing the EVC system 50 to resume normal operation.

By performing the tests as described above, it is possible to check the complete functionality of each outstation 20a, 20b including the call button 20-2, the loudspeaker-microphone assembly 20-1, the status indicator 20-3 and the audio lines between the outstations 20a, 20b and the master panel 10 by only one testing person 30.

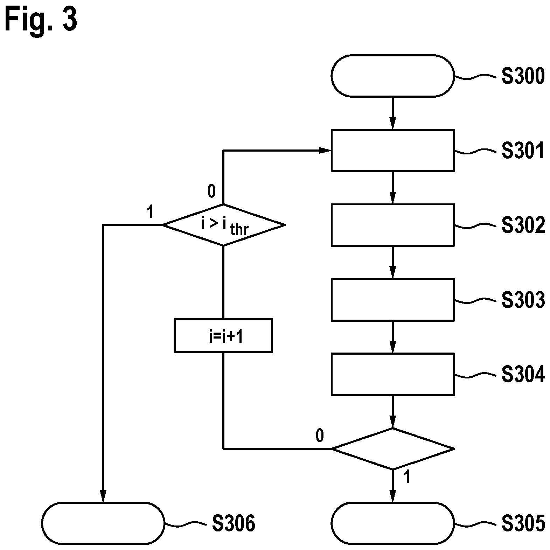

Figure 3 shows a flow chart including method steps according to an embodiment of the present invention.

The method starts in step S300.

In step S301, an audio signal produced by a micro-phone 20-1 of an outstation 20a, 20b of the emergency voice communication system 50 is communicated to a master panel 10 thereof. For example, the audio signal may be generated based on a message spoken by a test person 30 into a loudspeaker-microphone assembly 20-1 of a refuge outstation 20a, as shown in Figure 2.

In a next step S302, the audio signal is recorded by the master panel 10 and communicated back to the outstation 20a, 20b.

Subsequently, in step S303, the audio signal is played back, for example, by the loudspeaker-microphone assembly 20-1 of the refuge outstation 20a.

In step 304, the intelligibility of the message played, e.g., by the loudspeaker-microphone assembly 20-1 at the refuge outstation 20a, is verified. The verification may be carried out, for example, by the testing person 30 listening to the loudspeaker-microphone assembly 20-1 of the refuge outstation 20a or by an acoustic measuring device.

If the recorded message is clearly intelligible, branch "1", the testing person or testing device may confirm the functionality of the refuge outstation 20a and the positive test result may be logged, step S305.

If the recorded message is not clearly intelligible, branch "0", the method returns to step S301 and repeats the steps S301 to S304. A counter may be incremented by each repetition (i=i+1) and if the number of repetitions exceeds a predetermined threshold iₜₕᵣ, branch "1", a failure may be logged and a repair of the refuge outstation 20a may be initiated by the testing person 30, step S306.

## Claims

1. A method for testing an emergency voice communication system (50) having a master panel (10) and at least one outstation (20a, 20b), comprising, in a test mode of the emergency voice communication system (50), the steps:
a) communicating an audio signal produced by a microphone (20-1) of an outstation (20a, 20b) of the emergency voice communication system (50) to the master panel (10) thereof;
b) recording the audio signal by the master panel (10) and communicating the recorded audio signal back to the outstation (20a, 20b);
c) playing back the audio signal by a loudspeaker (20-1) of the outstation (20a, 20b).

2. Method according to claim 1, wherein boundary conditions of the audio signal are logged.

3. Method according to claim 1 or 2, wherein the recorded audio signal is communicated back to the outstation (20a, 20b) a predetermined time after its reception.

4. Method according to any one of the preceding claims, wherein the audio signal is produced by the microphone receiving a spoken message.

5. Method according to claim 4, wherein the message is spoken by a testing person (30) after initiating a call from the outstation (20a, 20b) to the master panel (10).

6. Method according to claim 4 or 5, wherein the testing person (30) is prompted by the master panel (10) to speak the message into the microphone (20-1) of the outstation (20a, 20b) for a predetermined time.

7. The method according to any one of claims 4 to 6, further comprising
d) verifying an intelligibility of the recorded spoken message played back by the loudspeaker at the outstation (20a, 20b);
e) exiting the test mode of the emergency voice communication system (50), if the recorded message is clearly intelligible, and
f) repeating the steps a) to d) if the recorded message is not clearly intelligible.

8. Method according to claim 7, wherein in step e) the intelligibility of the recorded message received at the outstation (20a, 20b) is verified by the testing person (30) listening to the loudspeaker (20-1) of the outstation (20a, 20b) or by an acoustic measuring device.

9. Method according to claim 7 or 8, wherein the steps a) to d) are performed at one or more further outstations (20a, 20b) before exiting the test mode.

10. Method according to claim 9, wherein a message from a preceding outstation (20a, 20b) recorded by the master panel (10) is deleted before the steps a) to d) are performed at a further outstation (20a, 20b).

11. A computing unit (100) comprising a processor configured to perform the method of any one of the preceding claims 1 to 10.

12. An emergency voice communication system (50) comprising a master panel (10), at least one outstation (20a, 20b) and a computing unit (100), especially a computing unit (100) according to claim 11, wherein in a test mode of the emergency voice communication system (50) the outstation (20a, 20b) is configured to communicate an audio signal produced by a microphone (20-1) of the outstation (20a, 20b) to the master panel (10), the master panel (10) is configured to record the audio signal and communicate the recorded audio signal back to the communicating outstation (20a, 20b) and the outstation (20a, 20b) is further configured playing back the recorded audio signal by a loudspeaker (20-1) of the outstation (20a, 20b).

13. A computer program comprising instructions which when executed by a computer cause the computer to perform the method of claims 1 to 10.

14. A computer program product on which the computer program according to claim 13 is stored.
